## Europäisches Patentamt
## European Patent Office
## Office européen des brevets

(19)

(11) Veröffentlichungsnummer : **0 150 262**
**B1**

(12)

# EUROPÄISCHE PATENTSCHRIFT

(45) Veröffentlichungstag der Patentschrift :
08.07.87

(21) Anmeldenummer : 84110620.6

(22) Anmeldetag : 06.09.84

(51) Int. Cl.⁴ : **C 09 J 3/16// C08L77/00, C08K5/09**

(54) Heissiegelkleber zum Beschichten von Flächengebilden, insbesondere von Einlagestoffen, und Verfahren zu seiner Herstellung.

(30) Priorität : 06.10.83 DE 3336417

(43) Veröffentlichungstag der Anmeldung :
07.08.85 Patentblatt 85/32

(45) Bekanntmachung des Hinweises auf die Patenterteilung : 08.07.87 Patentblatt 87/28

(84) Benannte Vertragsstaaten :
AT BE CH DE FR GB IT LI NL SE

(56) Entgegenhaltungen :
FR-A- 2 486 453
JAPAN PLASTICS AGE, Band 11, Nr. 10, Oktober 1973, Seiten 53-59, Toyo Soda Mfg. Co., Ltd.; H. KUROKI: "Hot melts and their applications. Part II Hot-melt adhesives - Their manufacturing processes and physical properties"

(73) Patentinhaber : Kufner Textilwerke GmbH
Irschenhauser Strasse 10-12
D-8000 München 70 (DE)

(72) Erfinder : Hefele, Josef, Dr.
Riesheimerstrasse 5
D-8032 Gräfelfing (DE)

(74) Vertreter : Eitle, Werner, Dipl.-Ing. et al
Hoffmann, Eitle & Partner Patentanwälte Arabellastrasse 4
D-8000 München 81 (DE)

## Beschreibung

Die Erfindung betrifft einen Heissiegelkleber auf Basis von Copolyamiden zum Beschichten von Flächengebilden, insbesondere von Einlagestoffen, wie gewebten, gewirkten oder Einlagestoffen auf Vliesbasis für Oberbekleidung. Die Erfindung betrifft auch ein Verfahren zur Herstellung dieses Heissiegelklebers und seine Verwendung.

Zum Beschichten von Einlagestoffen für die Oberbekleidung werden mit Abstand am häufigsten Copolyamide, die einen niedrigen Schmelzbereich besitzen, als Heissiegelkleber verwendet. In der Regel werden die Kleber in Punktform, entweder als Pulver auf Gravurwalzen oder als Pasten auf Siebrundschablonen aufgetragen und dann, bei Pasten nach vorheriger Trocknung, angesintert. Ausschnitte der so beschichteten Einlagestoffe werden in der Konfektionsindustrie auf die Rückseite von Oberstoffzuschnitten aufgebügelt, um die nötige Formhaltung in daraus gefertigten Kleidungsstücken zu erhalten.

Um die erforderliche Reinigungs- und auch Waschfestigkeit des Kleberverbundes aus Einlage und Oberstoff sicherzustellen, ist eine Mindestmenge an Klebersubstanz, die unter anderem auch von der Rasteranordnung der Punkte, der Einlagekonstruktion, der Einlageausrüstung, den Trocken- und Sinterbedingungen und nicht zuletzt von Art und Zusammensetzung der Klebermasse abhängig ist, erforderlich. Der Kleber beeinflusst den Griff des Siegelverbundes umso mehr, je grösser seine Menge ist, so dass also eine gewisse mehr oder weniger starke Versteifung des Verbundes unvermeidbar ist.

Der moderne Tragekomfort verlangt aber immer mehr Einlagestoffe, deren Versteifungseffekt möglichst gering ist. In manchen Fällen geht die Idealvorstellung der Konfektionsindustrie so weit, dass sie Einlagen wünscht, die nur noch eine Formhaltung und Stabilisierung des textilen Verbundes, aber keine Griffverstrammung mehr bewirken. In dieser Konsequenz ist der Wunsch in der Praxis wohl nicht zu realisieren.

Man kann sich ihm aber beispielsweise dadurch anzunähern versuchen, dass man verbesserte Klebermassen verwendet, die bereits bei deutlich reduziertem Auftragsgewicht die benötigte Mindesthaftung erbringen.

Der Erfindung liegt daher die Aufgabe zugrunde, einen Heissiegelkleber auf Basis von Copolyamiden aufzufinden, der bei deutlich reduzierter Beschichtungsmenge die gleiche Haftfestigkeit zeigt, wie die bisherigen Schmelzklebermassen auf Basis von Copolyamiden.

Ein solcher Heissiegelkleber auf Copolyamidbasis besteht erfindungsgemäss darin, dass er 0,3 bis 15 %, vorzugsweise 0,7 bis 12 %, Behensäure enthält.

Durch die Anwesenheit von Behensäure in der angegebenen Menge wird die Haftung handelsüblicher Heissiegelkleber auf Basis von Copolyamiden deutlich und im Durchschnitt zwischen 20 und 25 % gesteigert. Dies steht im völligen Gegensatz zu den Erwartungen des Fachmannes, da eine solche Kombination eher die Haftfestigkeit vermindern müsste, da Behensäure aufgrund seines langen aliphatischen Anteils mit apolarem Charakter eher eine Trennwirkung verursachen sollte. Überraschenderweise ist genau das Gegenteil der Fall. Mit der Erfindung ist es möglich, die bis herige Beschichtungsmenge um den Prozentsatz der erzielbaren Haftungssteigerung etwa zu reduzieren. Dadurch wird nicht nur sehr teures Beschichtungsmaterial eingespart. Auch der weicheren Griffvorstellung der Konfektionsindustrie wird deutlich nähergerückt.

Es sind zwar Heissiegelkleber, die Fettsäuren allgemein enthalten, bereits bekannt. So sind bereits Heissiegelklebermassen beschrieben worden, die Stearinsäure, Palmitinsäure, Oxystearinsäure und Säurewachse enthalten. Die besondere Wirksamkeit der Behensäure geht aus diesem vorveröffentlichten Stand der Technik nicht hervor. Ihre oben erwähnte Wirksamkeit konnte auch deshalb nicht erwartet werden, da aufgrund der Polaritätsunterschiede davon ausgegangen werden musste, dass keine molekulare Verteilung zwischen den Copolyamiden und der Behensäure stattfindet und die inhomogene Beschaffenheit des Klebers Anlass zu einem Abbau der Haftfestigkeit gibt. Umso überraschender ist die mit der Erfindung aufgefundene Wirksamkeit sowohl bei modifizierten Heissiegelmassen, die in Pastenform aufgebracht werden, wie bei Heissiegelmassen, die in Pulverform aufgetragen werden.

Bei der pulverförmigen Auftragsart haben sich modifizierte Heissschmelzklebermassen als besonders geeignet herausgestellt, die 0,3 bis 2,5 %, vorzugsweise 0,8 bis 1,5 %, Behensäure enthalten.

Um die pulverförmigen Ausgangsprodukte der Copolyamide für die pulverförmige Auftragsart mit der angegebenen Behensäuremenge zu versehen, ist es zweckmässig, die feingemahlene Behensäure möglichst gleichmässig unter das Copolyamidpulver zu mischen und anschliessend die Mischung einer Temperaturbehandlung oberhalb des Schmelzpunktes der Behensäure (ca. 80 °C), aber unterhalb des Schmelzbereiches des Copolyamides (durchschnittlich 110 bis 125 °C) zu unterziehen. Auf diese Weise erhält man ein pulverförmiges, mit Behensäure modifiziertes Ausgangsprodukt, dessen Pulverkörner gleichmässig mit Behensäure beladen sind. Man kann dieses Temperprodukt dann unmittelbar zum Beschichten nach dem Pulverpunktverfahren verwenden oder aber noch zusätzlich mit unbehandeltem Copolyamid mischen und dann für die Pulverpunktbeschichtung benutzen. Letztere Mischungen sind vorzuziehen.

Beispiel 1

Die Herstellung eines pulverförmig auftragbaren Heissiegelklebers gemäss der Erfindung kann beispielsweise auf folgende Weise erfolgen (GT = Gewichtsteile) :

100 GT Copolyamid 6/6·6/12 0-160 μm, Schmelzpunkt ca. 112 °C, Meltindex 160 °C ca. 25 g/10 min und

2 GT Behensäure, feingemahlen, unter 20 μm

werden in einem Schnellmischer vorgemischt und anschliessend durch Absieben nachgemischt. Die Mischung wird verschlossen 24 Stunden lang bei 90 °C getempert. Nach dem Mischen gibt man noch weitere

100 GT Copolyamidpulver 6/6·6/12 (siehe oben) hinzu und vermischt nochmals im Schnellmischer. Diese Endmischung mit einem Anteil von etwa 1 % Behensäure wird nun zum Pulverbeschichten im Pulverpunktbeschichtungsverfahren, z. B. wie folgt, verwendet.

Man wendet eine 16-Mesh-Gravurwalze an, auf der kalottenförmige Gravurvertiefungen derart gleichmässig angeordnet sind, dass sich die Kalottenmitten jeweils an den Ecken von gleichseitigen Dreiecken befinden, mit einem Abstand der Kalottenmitten von 1,6 mm. Die Gravurtiefe beträgt 0,31 mm und der Durchmesser der Gravur an der Walzenoberfläche 0,75 mm. Als Träger für die Beschichtung benutzt man eine Web-Wirkware, bestehend aus einer maschenbildenden Kette aus Polyamidmultifilgarnen 44 dtex und 13 Filamenten, 24 Kettfäden/2,54 cm (inch) und einem in die Maschen eingelegten Zellwollschussgarn Nm 20 aus Zellwollstapelfaser mit 4,0 cm Länge und 1,7 dtex Faserstärke. Die Schussdichte beträgt 120 Schussfäden/10 cm. In jede Masche ist ein Schussfaden eingelegt. Die maschenbildenden Kettfäden verlaufen jeweils mit 3 Maschen geradeaus und sind dann mit der nachfolgenden Masche um eine Maschenreihe seitwärts nach links bzw. rechts versetzt. Die Web-Wirkware wird vor dem Beschichten kettseitig angerauht, ausgewaschen und krumpffrei ausgerüstet.

Beim Vergleich der Haftfestigkeiten zwischen silikonisiertem Popelinoberstoff und Trägergewebe, einmal mit unbehandeltem Copolyamid und zum anderen mit erfindungsgemäss behandeltem Copolyamid beschichtet, erhält man die aus der nachstehenden Vergleichstabelle (Tabelle 1) hervorgehenden Unterschiede. In beiden Fällen wird eine Stahlklingenrakel mit 0,2 mm Stärke verwendet. Die Gravurwalzentemperatur beträgt 45 °C, die Heizwalzentemperatur 240 °C, die Beschichtungsgeschwindigkeit 10 m/min.

Tabelle 1

Fixierbedingungen : 165 °C Oberplattentemperatur, 100 °C Unterplattentemperatur, 300 p/cm² Druck, 15 sek., fixiert auf silikonisiertem Popeline

| Beschichtungs-pulver | Auftrags-gewicht g/m² | Haftung in | | Abriss nach Fixieren | Behandlung nach Fixieren |
|---|---|---|---|---|---|
| | | p/5 cm | p/g/5 cm | | |
| handelsübli-ches Polyamid-pulver ohne Behensäure | 17,3 | 1200 1500 1650 | 69,3 86,3 95,3 | nach 2 Std. nach 2 Tg. nach 2 Tg. | – – +1xChem.reinigen |
| handelsübli-ches Polyamid pulver mit ca. 1 % Behensäure | 13,4 | 1325 1500 1550 | 100 111,9 115,9 | nach 2 Std. nach 2 Tg. nach 2 Tg. | – – +1xChem.reinigen |

Wie man aus der Tabelle erkennt, wird mit 1 % Behensäurezusatz gemäss der oben aufgeführten Mischrezeptur bei einem Auftragsgewicht, welches von 17,3 auf 13,4 g/m² absinkt, praktisch die gleiche Haftfestigkeit, lediglich mit geringeren Abweichungen, erreicht.

Die Zusatzmenge an Behensäure soll bei Pulverpunktbeschichtungen nicht höher als 2,5 % liegen, da durch die Zugabe von Behensäure das Auftragsgewicht abgesenkt wird. Diese Absenkung ist jedoch nur erwünscht bis auf ein Niveau, bei dem die erforderliche Minimalfestigkeit noch nicht unterschritten wird. Die Absenkung dieser Auftragsmenge bringt den gewünschten weicheren Griff.

Bei der pulverförmigen Auftragsart reduziert Behensäure bereits in einer Menge, wie sie in obiger Mischung angegeben ist, ganz deutlich die Blockneigung des Klebers. Dies ist besonders beim Zuschneiden der Einlagen von Bedeutung. In aller Regel wird ein Stapel von aufeinandergelegten kleberbeschichteten Stofflagen zugeschnitten, wobei Kleberseite auf Kleberseite gelegt und dann mit

3

einem Bandmesser zugeschnitten wird. Bei diesem Vorgang könnte es zu Verklebungen der unmittelbar aufeinanderliegenden Kleberschichten kommen. Dieses Verkleben wird durch den Behensäurezusatz mit Sicherheit vermieden. Der Abbau der Blockneigung ist ausgeprägter als mit Stearinsäure.

Die Steigerung der Haftfestigkeit durch Behensäurezusatz bzw. die Möglichkeit, das Auftragsgewicht bei Behensäurezusatz zu reduzieren, ist nicht nur auf die Pulverpunktbeschichtung beschränkt. Auch bei der Pastenbeschichtung tritt eine Steigerung der Haftfestigkeit auf, wenn die als Paste aufgetragene Heissschmelzklebermasse auf Copolyamidbasis Behensäure enthält. Hier kann der Anteil an Schmelzklebermasse bis zu 15 % betragen. Vorzugsweise wird bei Pasten ein Anteil von 4 bis 12 % eingesetzt.

In der Ausgangspaste kann dabei die Behensäure in ähnlicher Form vorliegen und wirken wie die Fettsäuren, z. B. Stearinsäure, nach den beiden Patentschriften DE-PS 2 007 791 und 2 229 308. In Gegenwart von in Wasser gelösten Andickungsmitteln, wie Ammonsalzen polymerer Säuren, z. B. Polyacrylsäure, aber auch anderer in Wasser gelöster Andickungsmittel, wie Hydroxyethylzellulose, wirkt die Behensäure in alkalischem, vorzugsweise ammoniakalkalischem oder aminalkalischem Medium, dessen Amine flüchtiger Natur sein sollen, für Copolyamidpulver als Dispergator, der das Wasser in der Paste zurückhält und das Austrocknen bzw. Hartwerden der Paste vor der Rakel beim Druckvorgang vermindert. Da letzterer Effekt mit Behensäure weniger ausgeprägt ist als mit Stearinsäure, ist es zweckmässig, noch zusätzlich fettsaure Aluminium- oder Erdalkalisalze, wie feinstdisperses Magnesiumstearat, anzuwenden, welches das Rückhaltevermögen erheblich begünstigt. Der Mengenanteil derartiger Salze im getrockneten Heissiegelkleber soll 0,5 bis 3 Gew. % betragen.

Die Ausgangspaste kann ausser den genannten Produkten noch Weichmacher, geringe Mengen organischer Lösungsmittel, optische Aufheller, Farbpigmente, hochpolymere Ethylenoxide und auch Füllstoffe enthalten.

### Beispiel 2

Eine geeignete druckfähige Ausgangspaste, die nach dem Trocknen und Sintern die erfindungsgemässe Heissiegelmasse auf dem bedruckten Flächengebilde zurücklässt, besteht beispielsweise aus einer fliessfähig-pastösen Mischung folgender Komponenten :

100 GT Wasser
11 GT Behensäure
20 GT ammoniakalkalische 10 %-ige Lösung von polyacrylsaurem Ammonium, pH = 11
10 GT Weichmacher (z. B. Benzolsulfonsäure-N-(2-oxypropyl)amid
100 GT 6/6·6/12-Copolyamidpulver 0 bis 80 μm
1 GT feinstdisperses Magnesiumstearat
0,1 GT Polyethylenoxid, Molekulargewicht $5 \times 10^6$
0,1 GT Butanol

Dieser Pastenansatz wird im Siebdruckverfahren mit einer Rundsiebschablone mit 11-Mesh-Raster (Anordnung der Perforationen an den Eckpunkten regelmässiger Dreiecke im Abstand von 2,3 mm) auf die vorgenannte Web-Wirkware aus Polyamidmultifilgarn 44/14 als Kette und Zellwollgarn Nm 20 als Schussmaterial mit einer Innenrakel in einer Auftragsmenge von 20 g/m$^2$ (Trockengewicht) aufgetragen und bei 135 °C in 4 Minuten getrocknet und gesintert. Nach dem Sintern erhält man eine Schmelzklebermasse, die etwa einen Anteil von 10 % Behensäure enthält.

Der Vergleich mit einer Pastenbeschichtung gleicher Zusammensetzung, die jedoch anstelle von Behensäure die gleiche Menge an Stearinsäure enthält, geht aus der nachstehenden Tabelle 2 hervor. In der Tabelle sind die Haftwerte in p/5 cm auf verschiedenen Oberstoffen aufgeführt. Die Verbügelungen (Fixierungen) wurden bei 165 °C Oberplattentemperatur, 100 °C Unterplattentemperatur, 300 p/cm$^2$ Druck und 15 sek. Fixierzeit ausgeführt. Gemessen wurde die Haftung 24 Stunden nach dem Fixieren und zusätzlich nach einer chemischen Reinigung. Bei beiden Schmelzkleberarten war das Beschichtungsgewicht gleich.

Tabelle 2

| Oberstoff | Schmelzkleber mit 10 % Stearinsäure | | Schmelzkleber mit 10 % Behensäure | |
|---|---|---|---|---|
| | Haftung p/5 cm nach 24 h | p/5 cm nach 24 h +1xChem.R. | Haftung p/5 cm nach 24 h | p/5 cm nach 24 h +1xChem.R. |
| Fischgrät-Oberstoff aus Wolle | 1900 | 1775 | 1950 | 2150 |
| silikonisierter Popeline | 850 | 1050 | 1950 | 1800 |
| Gabardine-Oberstoff | 2375 | 1650 | 2750 | 2250 |

Ähnliche Ergebnisse erhält man auch an getrockneten Proben nach einem Waschprozess bei 40 °C in einer Haushaltswaschmaschine.

Wie man aus Tabelle 2 erkennen kann, ist gerade bei Oberstoffen, die besonders schwierig zu verbügeln sind, die Haftfestigkeitssteigerung recht ausgeprägt. Hier kann die Steigerung über 50 % betragen. Da besonders schwierig fixierbare Oberstoffe auch zugleich diejenigen sind, die bei Beschichtungsmengen im Grenzbereich Blasenbildungen erzeugen können, bietet der erfindungsgemässe Heissiegelkleber der Konfektionsindustrie besonders in solchen Fällen eine grosse Sicherheit, in denen eine breite Palette von Oberstoffen mit hoher Weichheit des Fixierverbundes verarbeitet werden muss.

Die Pastenbeschichtung mit erfindungsgemässem Heissiegelkeber mit Behensäurezusatz hat auch den grossen Vorteil, dass man die aufgedruckte Paste bei höheren Temperaturen trocknen und sintern kann als Pasten mit Stearinsäurezusatz. Dadurch kann die Fertigungsgeschwindigkeit gesteigert werden. Auch bei höheren Trocknertemperaturen sacken die Beschichtungspunkte nicht in den Träger ein. Die Beschichtungspunkte mit Behensäure sind erhabener ausgebildet und besitzen also eine grössere Höhe als die mit Stearinsäure. Vermutlich dürfte die erhabene Punktausbildung wenigstens teilweise ein Grund dafür sein, dass die Haftung angehoben ist.

**Patentansprüche**

1. Heißsiegelkleber auf Basis von Copolyamiden zum Beschichten von Flächengebilden, insbesondere von Einlagestoffen, welcher Heißsiegelkleber eine Fettsäure enthält, dadurch gekennzeichnet, daß er als Fettsäure 0,3 bis 15 Gew.-% Behensäure enthält.

2. Heissiegelkleber gemäss Anspruch 1, dadurch gekennzeichnet, dass der Gehalt an Behensäure 0,7 bis 12 Gew. % beträgt.

3. Pulverförmig auftragbarer Heissiegelkleber nach Anspruch 1, dadurch gekennzeichnet, dass der Gehalt an Behensäure 0,3 bis 2,5 Gew. % beträgt.

4. Pulverförmig auftragbarer Heissiegelkleber nach Anspruch 3, dadurch gekennzeichnet, dass der Gehalt an Behensäure 0,8 bis 1,5 Gew. % beträgt.

5. Pastenförmig auftragbarer Heissiegelkleber nach Anspruch 1, dadurch gekennzeichnet, dass der Gehalt an Behensäure 4 bis 12 Gew. % in der getrockneten Klebermasse beträgt.

6. Pastenförmig auftragbarer Heissiegelkleber nach Anspruch 5, dadurch gekennzeichnet, dass der Gehalt an fettsauren Erdalkali- oder Aluminiumsalzen in der getrockneten Klebermasse 0,5 bis 3 Gew. % beträgt.

7. Verfahren zur Herstellung eines Heissiegelklebers gemäss Anspruch 1, dadurch gekennzeichnet, dass man zu einem Copolyamidpulver 0,3 bis 2,5 Gew. %, vorzugsweise 0,8 bis 1,5 Gew. % Behensäure in feinpulveriger Form zumischt.

8. Verfahren nach Anspruch 7, dadurch gekennzeichnet, dass die Mischung einer Behandlung bei Temperaturen oberhalb des Schmelzpunktes der Behensäure, jedoch unterhalb des Schmelzpunktes des Copolyamids, unterzogen wird.

9. Verwendung eines Heissiegelklebers auf Basis von Copolyamiden, die 0,3 bis 15 Gew. % Behensäure enthalten, zum Beschichten von Flächengebilden, insbesondere Einlagestoffen für Oberbekleidung.

**Claims**

1. Hot-sealing adhesive based on copolyamides for the coating of fabrics, in particular for linings, said hot-sealing adhesive comprising a fatty acid, characterized in that it comprises as fatty acid 0.3 to 15 % by weight of behenic acid.

2. Hot-sealing adhesive according to claim 1, characterized in that the content of behenic acid is 0.7 to 12 % by weight.

3. Coatable hot-sealing adhesive in powder form according to claim 1, characterized in that the content of behenic acid is 0.3 to 2.5 % by weight.

4. Coatable hot-sealing adhesive in powder form according to claim 3, characterized in that the content of behenic acid is 0.8 to 1.5 % by weight.

5. Coatable hot-sealing adhesive in paste form according to claim 1, characterized in that the content of behenic acid is 4 to 12 % by weight in the dried adhesive material.

6. Coatable hot-sealing adhesive in paste form according to claim 5 characterized in that the content of fatty acidic alkaline earth or aluminium salts is 0.5 to 3 % by weight in the dried adhesive material.

7. Process for manufacturing a hot-sealing adhesive according to claim 1 characterized in that 0.3 to 2.5 % by weight, preferably 0.8 to 1.5 % by weight of behenic acid in a form of a fine powder is mixed with a copolyamide powder.

8. Process according to claim 7 characterized in that the mixture is given a treatment at temperatures above the melting point of the behenic acid, but below the melting point of the copolyamide.

9. Use of a hot-sealing adhesive based on copolyamides which comprise 0.3 to 15 % by weight of behenic acid for the coating of fabrics, in particular linings for outerwear.

**Revendications**

1. Colle fusible à chaud à base de copolyamides pour l'enduction d'articles plats, notamment d'étoffes de doublure, cette colle fusible à chaud contenant un acide gras caractérisée en ce qu'elle contient comme acide gras de 0,3 à 15 % en poids d'acide de ben.

2. Colle fusible à chaud selon la revendication 1, caractérisée en ce que la teneur en acide de ben est de 0,7 à 12 % en poids.

3. Colle fusible à chaud applicable sous forme de poudre selon la revendication 1, caractérisée en ce que la teneur en acide de ben est de 0,3 à 2,5 % en poids.

4. Colle fusible à chaud applicable sous forme de poudre selon la revendication 3, caractérisée en ce que la teneur en acide de ben est de 0,8 à 1,5 % en poids.

5. Colle fusible à chaud applicable sous forme de pâte selon la revendication 1, caractérisée en ce que la teneur en acide de ben de la masse adhésive séchée est de 4 à 12 % en poids.

6. Colle fusible à chaud applicable sous forme de pâte selon la revendication 5, caractérisée en ce que la teneur en sels alcalino-terreux ou alumineux d'acides gras de la masse adhésive séchée est de 0,5 à 3 %.

7. Procédé de fabrication d'une colle fusible à chaud selon la revendication 1, caractérisé en ce qu'on mélange à une poudre de copolyamide 0,3 à 2,5 % en poids, de préférence 0,8 à 1,5 % en poids d'acide de ben sous forme de poudre fine.

8. Procédé selon la revendication 7, caractérisé en ce que le mélange est soumis à un traitement à des températures supérieures au point de fusion de l'acide de ben mais inférieures au point de fusion du copolyamide.

9. Utilisation d'une colle fusible à chaud à base de copolyamides qui contiennent de 0,3 à 15 % en poids d'acide de ben pour l'enduction d'articles plats, en particulier de doublures pour vêtements de dessus.